## Europäisches Patentamt

(19) **European Patent Office**

**Office européen des brevets**

(11) Veröffentlichungsnummer: **0 047 872**
**B1**

(12) # EUROPÄISCHE PATENTSCHRIFT

(45) Veröffentlichungstag der Patentschrift:
06.11.85

(51) Int. Cl.⁴: **B 60 T 8/32,** G 01 P 3/489

(21) Anmeldenummer: **81106403.9**

(22) Anmeldetag: **18.08.81**

(54) Blockiergeschützte Fahrzeugbremsanlage.

(30) Priorität: **11.09.80 DE 3034227**

(43) Veröffentlichungstag der Anmeldung:
**24.03.82 Patentblatt 82/12**

(45) Bekanntmachung des Hinweises auf die Patenterteilung:
**06.11.85 Patentblatt 85/45**

(84) Benannte Vertragsstaaten:
**AT BE CH DE FR GB IT LI NL SE**

(56) Entgegenhaltungen:
**GB - A - 1 476 625**
**US - A - 3 843 210**

**IEEE TRANSACTIONS ON INSTRUMENTATION AND MEASUREMENT, Band IM-22, Nr. 3, September 1973, Seiten 278-279, New York, USA J.R. SMITH et al.: "Precision digital tachometer"**

(73) Patentinhaber: **Knorr-Bremse GmbH, Moosacher Strasse 80, D-8000 München 40 (DE)**

(72) Erfinder: **Saumweber, Eckart, Dr., Mühlstrasse 15, D-8035 Gauting (DE)**
Erfinder: **Schirmer, Klaus, Rosmarinweg 4, D-8070 Ingolstadt (DE)**

## Beschreibung

Die Erfindung bezieht sich auf eine blockiergeschützte Fahrzeugbremsanlage mit einer die Drehzahl mindestens eines Rades erfassenden Einrichtung und mit einer Auswerteschaltung, die in Abhängigkeit von erfassten Drehzahlsignalen die Betätigung der Fahrzeugbremsanlage steuert, wobei die drehzahlerfassende Einrichtung folgendes enthält: einen mit dem Rad gekoppelten Generator, wobei die Frequenz der Ausgangssignale des Generators der Drehzahl des Rades proportional ist, einen digitalen Zähler, dessen Zähleingang mit dem Generator verbunden ist, eine Steuerschaltung, die mit einem Steuereingang des Zählers verbunden ist und den Zähler während vorgegebener Messintervalle abwechselnd in Zählbereitschaft setzt, zurücksetzt und/oder sperrt und einen mit dem Ausgang des Zählers und mit der Steuerschaltung verbundenen Speicher, der zu von der Steuerschaltung vorgegebenen Zeitpunkten den Zählerstand des Zählers übernimmt.

Derartige Fahrzeugbremsanlagen sind allgemein bekannt. Als Generator werden üblicherweise Impulsgeneratoren verwendet, deren Ausgangssignale rechteckförmigen Verlauf haben. Wird dagegen ein Generator verwendet, dessen Ausgangssignale sinusförmig sind, so wird dem Generator noch eine Impulsformerstufe zugeordnet (Sinus-Reckteck-Wandler), der reckteckförmige Signale ausgibt. Ein wesentlicher Mangel derartiger Fahrzeugbremsanlagen liegt darin, dass der am Ende eines Messintervalles erhaltene Messwert nur dann korrekt ist, wenn sich die Drehzahl des Rades während des Messintervalles nicht geändert hat. Andernfalls stellt der erhaltene Messwert nur einen Mittelwert der Drehzahl während des Messintervalles dar.

Bei blockiergeschützten Fahrzeugbremsanlagen ist es jedoch wünschenswert, den jeweils aktuellsten Drehzahlwert zu erhalten und nicht einen in der Vergangenheit liegenden Wert, da während eines Regelzyklus relativ schnelle Änderungen der Drehzahl auftreten.

Aufgabe der vorliegenden Erfindung ist es daher, die Fahrzeugbremsanlage der eingangs genannten Art dahingehend zu verbessern, dass der erhaltene Messwert der Drehzahl besser der tatsächlichen Drehzahl am Ende des Messintervalles entspricht.

Diese Aufgabe wird durch die im Kennzeichnungsteil des Anspruches 1 angegebenen Merkmale gelöst. Die erfindungsgemässe Fahrzeugbremsanlage basiert auf dem Grundgedanken, durch Extrapolation aus den Messwerten des jeweils letzten und des jeweils vorletzten Messintervalles einen korrigierten Drehzahlwert zu erhalten.

Besonders einfach kann dies mit einer linearen Extrapolation erreicht werden, (Patentanspruch 2 und Schaltungsanordnung der Patentansprüche 3 und 4), wobei in diesem Fall gewisse Bauelemente durch eine festverdrahtete Logik eingespart werden können. (Anspruch 5)

Selbstverständlich kann auch eine quadratische Extrapolation durchgeführt werden, wobei jedoch derzeit eine lineare vorzuziehen ist, da diese den während eines Messintervalls auftretenden, resultierenden Messfehler auf ein vertretbares Mass senkt.

Im folgenden wird die Erfindung anhand eines Ausführungsbeispiels im Zusammenhang mit den Figuren ausführlicher erläutert. Es zeigt:

Fig. 1 ein Blockschaltbild der erfindungsgemässen Fahrzeugbremsanlage;

Fig. 2 ein Diagramm einer zeitlich sich ändernden Drehzahl, zur Erläuterung der Wirkungsweise der Fahrzeugbremsanlage nach Fig. 2;

Fig. 3 ein detaillierteres Blockschaltbild eines bevorzugten Ausführungsbeispiels der Fahrzeugbremsanlage und

Fig. 4 ein Zeitdiagramm einzelner Steuerimpulse.

Ein mit dem Rad gekoppelter Impulsgenerator 1 erzeugt – gegebenenfalls in Verbindung mit einer Impulsformerstufe – ein impulsförmiges Ausgangssignal, dessen Frequenz proportional der Drehzahl des Rades ist. Der Impulsgenerator 1 ist mit einem Eingang einer Torschaltung 2, vorzugsweise einem UND-Gatter, verbunden, dessen Ausgang dem Zähleingang eines Zählers 3 zugeführt wird. Eine Steuerschaltung 4 ist mit einem weiteren Eingang der Torschaltung 2 sowie mit einem Steuereingang des Zählers 3 verbunden. Der Ausgang bzw. die Ausgänge des Zählers 3 sind mit Eingängen eines ersten Speichers 5 verbunden. Die Ausgänge des Speichers 5 sind mit Eingängen eines zweiten Speichers 6 verbunden.

Die Ausgänge des Speichers 5 sind mit einem Eingang eines Faktormultiplizierers 7 und mit einem Eingang eines Addierers 8 verbunden. Der andere Eingang des Faktormultiplizierers 7 ist mit einem Faktorgeber 7' verbunden, während der Ausgang des Faktormultiplizierers 7 mit dem anderen Eingang des Addierers 8 verbunden ist.

Die Ausgänge des zweiten Speichers 6 sind mit einem Eingang eines weiteren Faktormultiplizierers 9 verbunden, dessen anderer Eingang mit einem weiteren Faktorgeber 9' verbunden ist.

Der Ausgang des Addierers 8 ist mit einem Eingang eines Subtrahierers 10 verbunden, dessen anderer Eingang (Subtraktionseingang) mit dem Ausgang des Faktormultiplizierers 9 verbunden ist.

Der Ausgang des Subtrahierers 10 gibt den korrigierten Wert der Drehzahl des letzten Messintervalles (d.h. den Wert der Drehzahl am Ende des letzten Messintervalles) an eine Auswertschaltung, die aus den Drehzahlsignalen ein Blockieren des Rades erkennt und die Fahrzeugbremse so steuert, dass der Haftwert zwischen Rad und Fahrbahn möglichst gut ausgenutzt wird. Die genaue Ausbildung der Auswertschaltung ist nicht Gegenstand dieser Erfindung und soll daher nicht näher beschrieben werden. Eine Fülle derartiger Auswertschaltungen ist auch in der Literatur beschrieben, so dass der Fachmann ohne weiteres die geeignetste auswählen kann.

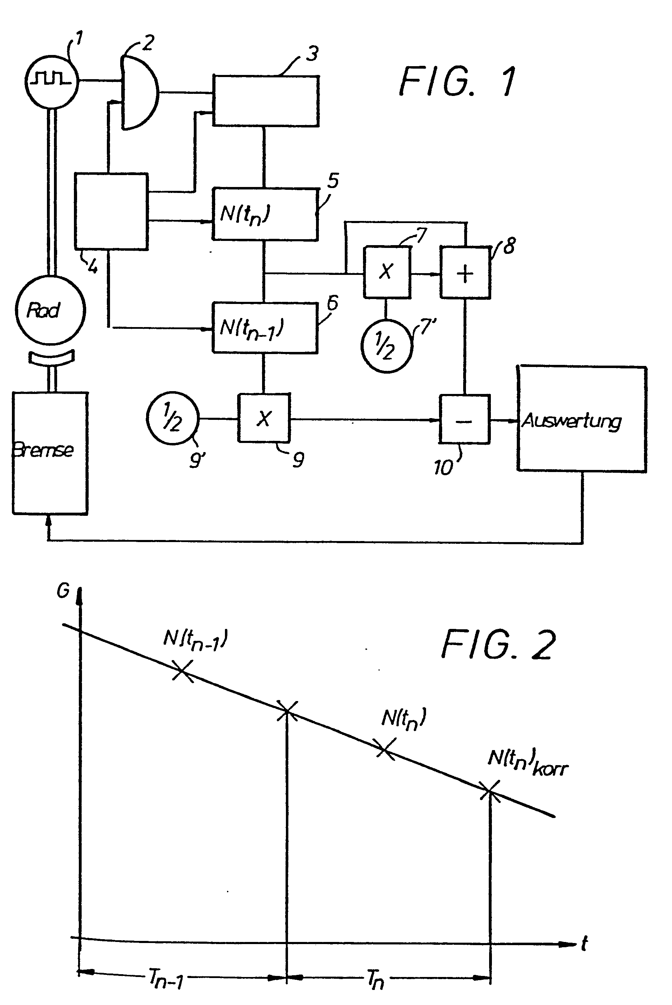

Die Arbeitsweise der Schaltungsanordnung der Fig. 1 ist wie folgt: Die von dem Impulsgenerator stammenden Impulse werden während der von der Steuerschaltung 4 vorgegebenen Messintervallen in den Zähler 3 eingezählt. Am Ende des Messintervalles wird die Torschaltung 2 durch die Steuerschaltung 4 kurzzeitig gesperrt, und der Speicher 5 wird von der Steuerschaltung 4 so gesteuert, dass er den Zählinhalt des Zählers 3 übernimmt.

Anschliessend wird der Zähler 3 auf 0 zurückgesetzt, und danach wird die Torschaltung 2 wieder geöffnet, so dass ein neues Messintervall beginnen kann. Nach Ablauf dieses Messintervalles ($T_n$ in Fig. 2) wird die Torschaltung wieder gesperrt. Über einen Steuerimpuls von der Steuerschaltung 4 wird der zweite Speicher 6 in die Lage versetzt, den in dem ersten Speicher 5 gespeicherten Zählinhalt des vorletzten Messintervalles zu übernehmen. Darauf wird der erste Speicher 5 so gesteuert, dass er den Zählerstand des letzten Messintervalles übernimmt.

Unter der Annahme einer linearen Änderung der zu messenden Drehzahl (Fig. 2) enthält somit der Speicher 5 einen Zählerstand ($N[t_n]$), der der Drehzahl in der Mitte des Messintervalles $T_n$ entspricht. Der Speicher 6 enthält dagegen einen Wert ($N[t_{n-1}]$), der der Drehzahl in der Mitte des vorletzten Messintervalles $T_{n-1}$ entspricht. In den Faktormultiplizierern 7 und 9 werden die entsprechenden Speicherinhalte mit dem Faktor 0,5 multipliziert. Am Ausgang des Addierers 8 erscheint folglich ein Wert von $1,5 \times N(t_n)$. Von diesem Wert wird in dem Subtrahierer 10 der Ausgangswert des Faktormultiplizierers 9, d.h. $0,5 \times N(t_{n-1})$ subtrahiert, so dass am Ausgang des Subtrahierers 10 ein Wert von $1,5 \times N(t_n) - 0,5 \times N(t_{n-1})$ erscheint. Dieser korrigierte Wert entspricht – unter der Voraussetzung linearer Änderung der Drehzahl – genau dem Wert der Drehzahl am Ende des Messintervalles $T_n$.

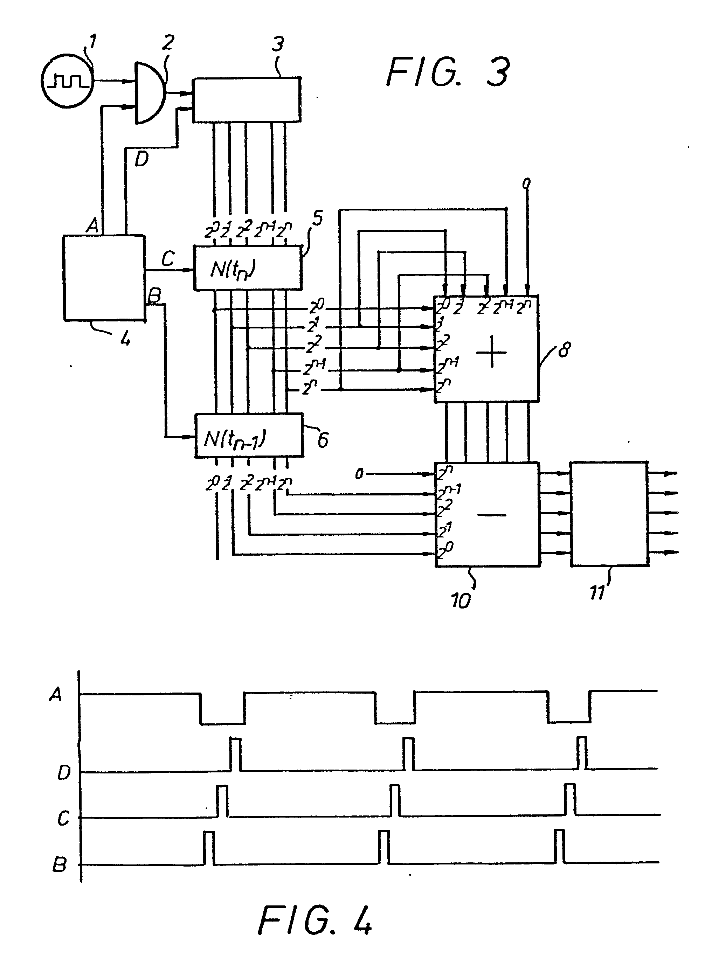

In Fig. 3 sind die den Teilen der Fig. 1 entsprechenden Teile mit gleichen Bezugszeichen versehen. Der grundlegende Aufbau der Schaltungsanordnung der Fig. 3 entspricht dem der Fig. 1. Lediglich die Faktormultiplizierer sind dort durch eine fest verdrahtete Verbindung zwischen den Speichern 5 bzw. 6 und dem Addierer 8 bzw. dem Subtrahierer 10 ersetzt worden.

Sind nämlich die Ausgänge der Speicher 5 und 6 binär kodiert, so ist eine Multiplikation mit dem Faktor 0,5 in besonders einfacher Weise dadurch zu erhalten, dass die einzelnen Binärstellen um eine Stelle nach rechts, d.h. im Sinne zu kleineren Werten hin verschoben wurden.

Dies bedeutet also, dass die einen Eingänge des Addierers 8 jeweils in der richtigen Zuordnung mit den Ausgängen des Speichers 5 verbunden sind, d.h. beispielsweise die Bitstelle mit dem Wert $2^0$ des Speichers 5 ist mit der entsprechenden Bitstelle $2^0$ des Addierers 8 verbunden. Die weiteren Eingänge des Addierers 8 sind dagegen so mit den Ausgängen des Speichers 5 verbunden, dass der Ausgang mit dem Wert $2^n$ des Speichers mit dem Eingang mit dem Wert $2^{n-1}$ des Addierers 8 verbunden ist, usw., bis der Ausgang mit dem Wert $2^1$ mit dem Eingang mit dem Wert $2^0$ verbunden ist. Der Eingang mit dem Wert $2^n$ des Addierers 8 führt dagegen den Wert 0.

In gleicher Weise sind die Ausgänge des Speichers 6 um eine Bitstelle versetzt mit den Eingängen des Subtrahierers 10 verbunden.

Zusätzlich kann noch vorgesehen sein, dass die Ausgänge des Subtrahierers 10 mit Eingängen eines weiteren Speichers 11 verbunden sind.

In Fig. 4 ist die zeitliche Ablauffolge der einzelnen Steuerimpulse dargestellt. Die mit A bezeichneten Steuerimpulse stellen die Torimpulse dar, während derer die Torschaltung 2 die Impulse von dem Impulsgenerator 1 durchlässt. Am Ende der einzelnen Impulse A erscheint ein kurzer Impuls B, der den Speicher 6 so steuert, dass er den Speicherinhalt des Speichers 5 übernimmt. Nach Verschwinden der jeweiligen Impulse B erscheint ein kurzer Impuls C, der den Speicher 5 so steuert, dass er den Zählinhalt des Zählers 3 übernimmt. Schliesslich erscheint nach Verschwinden der jeweiligen Impulse C ein Rücksetzimpuls D, der den Zähler auf 0 zurücksetzt. Darauf erscheint der nächste Torsteuerimpuls A, und ein weiterer Messzyklus beginnt.

Es lässt sich leicht einsehen, dass die Schaltungsanordnung bei sich linear während des Messintervallss ändernder Drehzahl stets den exakten Wert der Drehzahl am Ende des jeweils letzten Messintervalles, und zwar sowohl bei zunehmender als auch abnehmender Drehzahl liefert.

Anstelle einer linearen Extrapolation kann selbstverständlich auch eine quadratische, kubische Extrapolation angewendet werden oder auch eine Extrapolation nach einer e-Funktion oder nach einer Hyperbel, wenn zu erwarten ist, dass sich die Drehzahl nach einer solchen Funktion ändert, und wenn eine höhere Messgenauigkeit gefordert wird. Die Logikschaltung der Bauteile 7 bis 10 muss dann so aufgebaut sein, dass sie die entsprechende Funktion aus den beiden Zählerständen ermittelt. Will man die Genauigkeit noch höher treiben, so kann noch ein dritter Speicher vorgesehen sein, der dem Speicher 6 nachgeschaltet ist und der dann den Zählinhalt des Zählers des vor-vorletzten Messintervalles ($T_{n-2}$) enthält.

**Patentansprüche**

1. Blockiergeschützte Fahrzeugbremsanlage mit einer die Drehzahl mindestens eines Rades erfassenden Einrichtung und mit einer Auswerteschaltung, die in Abhängigkeit von erfassten Drehzahlsignalen die Betätigung der Fahrzeugbremsanlage steuert, wobei die die drehzahlerfassende Einrichtung folgendes enthält: einen mit dem Rad gekoppelten Generator, wobei die Frequenz der Ausgangssignale des Generators der Drehzahl des Rades proportional ist, einen digitalen Zähler, dessen Zähleingang mit dem Generator verbunden ist, eine Steuerschaltung, die mit einem Steuereingang des Zählers verbunden ist und den Zähler während vorgegebener Messintervalle abwechselnd in Zählbereitschaft setzt, zurücksetzt und/oder sperrt und einen mit dem Ausgang des Zählers und mit der Steuerschaltung verbundenen Speicher, der zu von der Steuerschaltung vorgegebenen Zeitpunkten den Zählerstand des Zählers übernimmt, dadurch gekennzeichnet, dass ein zusätzlicher Speicher (6) vorgesehen ist, der so mit der Steuerschaltung (4) und dem Speicher (5) oder dem Zähler (3) verbunden ist, dass er jeweils den Zählerstand $(N[t_{n-1}])$ am Ende des vorletzten Messintervalles $(T_{n-1})$ enthält, während der Speicher (5) jeweils den Zählerstand $(N[t_n])$ am Ende des letzten Messintervalles $(T_n)$ enthält, und dass beide Speicher (5, 6) mit einer Logikschaltung (7–10) verbunden sind, die aus den beiden gespeicherten Zählerständen $(N[t_{n-1}], N[t_n])$ einen korrigierten Drehzahlwert erzeugt.

2. Fahrzeugbremsanlage nach Anspruch 1, dadurch gekennzeichnet, dass die Logikschaltung (7–10) eine lineare Extrapolation durchführt.

3. Fahrzeugbremsanlage nach Anspruch 1 oder 2, dadurch gekennzeichnet, dass die Logikschaltung (7–10) folgendes enthält: einen Addierer (8), dessen einer Eingang mit dem Ausgang des Speichers (5) und dessen zweiter Eingang über einen Faktormultiplizierer (7, 7′) mit dem Ausgang des Speichers verbunden ist, einen Subtrahierer (10), dessen einer Eingang mit dem Ausgang des Addierers (8) und dessen Subtraktionseingang über einen weiteren Faktormultiplizierer (9, 9′) mit dem Ausgang des zusätzlichen Speichers (6) verbunden ist, wobei das Ausgangssignal des Subtrahierers (10) dem korrigierten Wert der Drehzahl entspricht.

4. Fahrzeugbremsanlage nach Anspruch 3, dadurch gekennzeichnet, dass die Faktormultiplizierer (7, 7′; 9, 9′) ihren Eingangswert mit dem Faktor 0,5 multiplizieren.

5. Fahrzeugbremsanlage nach Anspruch 4, dadurch gekennzeichnet, dass die Faktormultiplizierer über festverdrahtete Verbindungen zwischen den Speichern (5 bzw. 6) und dem Addierer (8) bzw. dem Subtrahierer (10) realisiert sind, wobei die Verbindungen um eine Bitstelle versetzt zwischen den zu verbindenden Bauteilen hergestellt sind.

6. Fahrzeugbremsanlage nach einem oder mehreren der Ansprüche 1 bis 5, dadurch gekennzeichnet, dass der Ausgang (von 10) der Logikschaltung (7–10) mit einem weiteren Speicher (11) verbunden ist.

## Claims

1. Anti-skid vehicle brake installation having a device determining the speed of at least one wheel, and an evaluation circuit which, dependent on the speed signals determined, controls the actuation of the vehicle brake installation, whereby the speed-determining device contains the following: a generator coupled to the wheel, wherein the frequency of the output signals of the generator is proportional to the speed of the wheel, a digital counter whose counting input is connected to the generator, a control circuit which is connected to a control input of the counter and, for a specific measurement period, alternately puts the counter into operational counting readiness, resets it and/or blocks it, and a memory connected to the output of the counter and to the control circuit, which memory takes over the count of the counter at moments predetermined by the control circuit, characterised in that an additional memory (6) is provided which is so connected to the control circuit (4) and the memory (5) or the counter (3) that it respectively stores the count of the counter $(N[t_{n-1}])$ at the end of the penultimate measurement period $(T_{n-1})$, whilst the memory (5) respectively stores the count of the counter $(N[t_n])$ at the end of the final measurement period $(T_n)$, and in that both memories (5, 6) are connected to a logic circuit (7–10) which produces a corrected speed value from the two stored counter states $(N[t_{n-1}], N[t_n])$.

2. Vehicle brake installation according to claim 1, characterised in that the logic circuit (7–10) carries out a linear extrapolation.

3. Vehicle brake installation according to claim 1 or 2, characterised in that the logic circuit (7–10) contains the following: an adder (8) whose one input is connected to the output of the memory (5), and whose second input is connected by means of a factor multiplier (7, 7′) to the output of the memory, a subtracter (10), whose one input is connected to the output of the adder (8), and whose subtraction input is connected by means of a further factor multiplier (9, 9′) to the output of the additional memory (6), whereby the output signal of the subtracter (10) corresponds to the corrected value of the speed.

4. Vehicle brake installation according to claim 3, characterised in that the factor multipliers (7, 7′; 9, 9′) multiply their input value by the factor 0.5.

5. Vehicle brake installation according to claim 4, characterised in that the factor multipliers are made by means of fixedly wired connections between the memories (5 or 6) and the adder (8) or the subtracter (10), whereby the connections are bit-offset between the components to be connected.

6. Vehicle brake installation according to one or several of claims 1 to 5, characterised in that the output (of 10) of the logic circuit (7–10) is connected to a further memory (11).

## Revendications

1. Installation de freinage de véhicules à protection contre le blocage, comportant un dispositif capteur saisissant la vitesse de rotation d'au moins une roue et un circuit d'évaluation qui, en fonction des signaux représentatifs de la vitesse de rotation qui a été saisie, commande l'actionnement de l'installation de freinage, le dispositif captant la vitesse de rotation comprenant ce qui suit: un générateur accouplé à la roue, la fréquence des signaux de sortie du générateur étant proportionnelle à la vitesse de rotation de la roue, un compteur numérique dont l'entrée de comptage est reliée au générateur, un circuit de commande qui est relié à l'entrée de commande du compteur et qui place, pendant des intervalles de mesure prédéterminés, le compteur dans son état prêt à compter, dans son état initial et/ou dans son état de blocage, et une mémoire reliée à la sortie du compteur et au circuit de commande, et prenant en charge, à des instants prédéterminés par le circuit de commande, l'état de comptage du compteur, caractérisée par le fait qu'il est prévu une mémoire supplémentaire (6) qui est reliée de telle façon au circuit de commande (4), à la mémoire (5) et au compteur (3), qu'elle contient l'état de comptage ($N[t_{n-1}]$) à la fin de l'avant-dernier intervalle de mesure ($T_{n-1}$), alors que la mémoire (5) contient l'état de comptage ($N[t_{n-1}]$) à la fin du dernier intervalle de mesure ($T_n$), et que les deux mémoires (5, 6) sont reliées à un circuit logique (7-10) qui produit, à partir des deux états de comptage ($N[t_{n-1}]$, $N[t_n]$), une valeur corrigée de la vitesse de rotation.

2. Installation de freinage de véhicules selon la revendication 1, caractérisée par le fait que le circuit logique (7-10) réalise une extrapolation linéaire.

3. Installation de freinage de véhicules selon la revendication 1 ou 2, caractérisée par le fait que le circuit logique (7-10) comporte ce qui suit: un additionneur (8) dont une entrée est reliée à la sortie de la mémoire (5) et dont la seconde entrée est reliée, par l'intermédiaire d'un multiplicateur à facteurs (7, 7'), à la sortie de la mémoire, un soustracteur (10) dont une entrée est reliée à la sortie de l'additionneur (8) et dont l'entrée de soustraction est reliée, par l'intermédiaire d'un second multiplicateur à facteurs (9, 9'), à la sortie de la mémoire supplémentaire (6), le signal de sortie du soustracteur (10) correspondant à la valeur corrigée de la vitesse de rotation.

4. Installation de freinage de véhicules selon la revendication 3, caractérisée par le fait que les multiplicateurs à facteurs (7, 7', 9, 9') multiplient la valeur d'entrée par le facteur 0,5.

5. Installation de freinage de véhicules selon la revendication 4, caractérisée par le fait que les multiplicateurs à facteurs sont réalisés, par l'intermédiaire de liaisons câblées à demeure, entre les mémoires (5 et 6) et l'additionneur (8) ou le soustracteur (10), les liaisons étant réalisées avec un décalage d'un chiffre binaire entre des composants à relier entre eux.

6. Installation de freinage de véhicules selon une ou plusieurs des revendications 1 à 5, caractérisée par le fait que la sortie (de 10) du circuit logique (7-10) est reliée à une mémoire supplémentaire (11).

FIG. 1

FIG. 2

FIG. 3

FIG. 4